# EUROPÄISCHE PATENTSCHRIFT

(11) **EP 2 751 364 B1**
(45) Veröffentlichungstag und Bekanntmachung des Hinweises auf die Patenterteilung: **03.12.2014**
(21) Anmeldenummer: 12756063.9
(22) Anmeldetag: 13.07.2012
(51) Int. Cl.: E05F 5/00

(54) **DÄMPFVORRICHTUNG FÜR BEWEGBARE MÖBELTEILE**
DAMPING DEVICE FOR MOVABLE FURNITURE PARTS
DISPOSITIF D'AMORTISSEMENT POUR DES PIÈCES DE MEUBLE MOBILES

(30) Priorität: 31.08.2011 AT 12432011
(43) Veröffentlichungstag der Anmeldung: 09.07.2014
(73) Patentinhaber: Julius Blum GmbH, 6973 Höchst (AT)
(72) Erfinder: BRUNNMAYR, Harald, A-6912 Hörbranz (AT)
(74) Vertreter: Gangl, Markus
(86) Internationale Anmeldenummer: PCT/AT2012/000187
(87) Internationale Veröffentlichungsnummer: WO 2013/029068

(56) Entgegenhaltungen:
- EP-A1- 1 241 374
- WO-A1-2010/108201
- WO-A1-2010/108203

## Beschreibung

Die vorliegende Erfindung bezieht sich auf eine Dämpfvorrichtung für bewegbare Möbelteile, umfassend:
- ein Dämpfergehäuse,
- eine im Dämpfergehäuse angeordnete Fluidkammer, in der ein Kolben verschiebbar gelagert ist,
- einen mit dem Kolben verbundenen Stößel, wobei zwischen dem Dämpfergehäuse und dem Stößel zumindest eine Dichtung zur Abdichtung der Fluidkammer angeordnet ist, wobei die Dichtung vom Stößel durchsetzt wird,
- eine mit der Fluidkammer in fluidleitender Verbindung stehende Ausgleichskammer, welche seitlich parallel zur Fluidkammer verläuft und in der zumindest ein verformbarer Ausgleichskörper zur Kompensation einer Volumenänderung aufgrund des in die Fluidkammer eintauchenden Stößels angeordnet ist.

Die Dämpfwirkung von Fluiddämpfern beruht im Wesentlichen auf dem Strömungswiderstand eines in einer Fluidkammer vorhandenen Dämpfungsfluids. Bei Druckbeaufschlagung des Kolbens wird dieser relativ zur Fluidkammer verschoben, wobei das Fluid über Durchströmöffnungen durch den Kolben hindurch oder zwischen Kolben und Fluidkammer von einer Zylinderkammer in eine andere Zylinderkammer strömt. Um einen Austritt des flüssigen Dämpfungsmediums aus dem Dämpfer zu verhindern, ist der Stößel bzw. die Kolbenstange gegenüber der Fluidkammer mit einer Dichtung abgedichtet, wobei der Stößel bzw. die Kolbenstange an dieser Dichtung gleitend verschiebbar ist. Die Ausgleichskammer ist dazu vorgesehen, das Volumen des in die Fluidkammer einfahrenden bzw. ausfahrenden Stößels bzw. der Kolbenstange zu kompensieren, sodass eine Zerstörung der Dämpfvorrichtung durch die erhöhte Druckbelastung der einfahrenden Kolbenstange verhindert wird.

In der WO 2010/108203 A1 der Anmelderin ist ein Möbelscharnier mit einer Dämpfvorrichtung beschrieben, welche zwei über einen Kanal verbundene Fluidkammern aufweist. In einer Fluidkammer ist eine Vorrichtung mit einem verschiebbaren Kolben oder mit einem verformbaren Materialstück angeordnet, welches zum Volumenausgleich der Kolbenstange vorgesehen ist.

In der DE 199 01 517 A1 ist ein Türschließer mit einer hydraulischen Kolben-ZylinderEinheit beschrieben, wobei in einem der Hydraulikräume ein den Druckausgleichsraum bildender Ausgleichskörper angeordnet ist. Der Ausgleichskörper ist mit einem Kolbenbauteil verbunden und sackförmig ausgebildet, wobei das einfahrende Volumen der Kolbenstange durch den im Hydraulikraum vorhandenen Ausgleichskörper kompensierbar ist.

In der EP 1 241 374 A1 und in der JP 60-018631 sind jeweils Dämpfvorrichtungen mit einem in einer Fluidkammer geführten Kolben und einer parallel zur Fluidkammer verlaufenden Ausgleichskammer beschrieben, wobei die zwischen dem Dämpfergehäuse und dem Stößel angeordnete Dichtung und das in der Ausgleichskammer befindliche komprimierbare Material voneinander gesondert ausgebildet sind.

Beim Stand der Technik sind für die Dämpfvorrichtung relativ viele Einzelteile notwendig, welche durch den erwünschten kompakten Aufbau von Möbeldämpfern zusätzlich sehr klein und empfindlich ausgebildet sind, wobei auch der Zusammenbau des Dämpfers relativ aufwändig ist.

Aufgabe der vorliegenden Erfindung ist es daher, eine Dämpfvorrichtung der eingangs erwähnten Gattung unter Vermeidung oben genannter Nachteile anzugeben.

Dies wird erfindungsgemäß durch die Merkmale des Patentanspruchs 1 gelöst. Weitere vorteilhafte Ausgestaltungen sind in den Unteransprüchen angegeben.

Gemäß der Erfindung ist also vorgesehen, dass der verformbare Ausgleichskörper und die zumindest eine Dichtung zusammen einstückig ausgebildet sind.

Auf diese Weise kann die Anzahl der erforderlichen Bauteile der Dämpfvorrichtung reduziert werden, auch resultiert die einstückige Ausbildung des Ausgleichskörpers mit der Dichtung in einem robusteren Aufbau und ist damit weniger störanfällig.

Das Material des Ausgleichskörpers mit der daran angeformten Dichtung kann aus Kunststoff, beispielsweise aus einem Thermoplast oder aus einem Elastomer bzw. auch aus einer Mischung dieser Materialien gebildet sein, wobei vorzugsweise vorgesehen ist, dass dieses einstückige Bauteil aus Kautschuk gebildet ist.

Der Ausgleichskörper kann als, vorzugsweise mit Luft gefüllter, Hohlkörper ausgebildet sein, der fluiddicht ausgebildet ist. Dies hat gegenüber herkömmlichen Ausgleichskörpern aus Schaumstoff den Vorteil, dass sich die im Schaumstoff enthaltene Luft nicht mehr im Dämpfungsmedium (beispielsweise im Silikonöl) lösen kann, wodurch ein linearer Volumenausgleich auch nach zahlreichen Dämpfungshüben sichergestellt ist. Der Ausgleichskörper kann gemäß einer möglichen Ausführungsform im Wesentlichen sackförmig ausgebildet sein, der in Ruhelage die Ausgleichskammer im Wesentlichen vollständig ausfüllt und bei einem Dämpfungshub komprimierbar ist.

Gemäß einem möglichen Ausführungsbeispiel kann vorgesehen sein, dass in der Ausgleichskammer zur Abdichtung derselben ein Dichtungskörper angeordnet ist, wobei der Ausgleichskörper, die Dichtung und der Dichtungskörper gemeinsam einstückig ausgebildet sind. Auf diese Weise kann die Anzahl der erforderlichen Bauteile für den Dämpfer noch einmal reduziert werden.

Das erfindungsgemäße Möbelscharnier ist durch wenigstens eine Dämpfvorrichtung der in Rede stehenden Art gekennzeichnet.

Weitere Einzelheiten und Vorteile der Erfindung werden anhand des in den Zeichnungen gezeigten Ausführungsbeispiels erläutert. Dabei zeigt bzw. zeigen:
- Fig. 1: ein schrankförmiges Möbel mit einer schwenkbar angelenkten Türe in einer perspektivischen Ansicht,
- Fig. 2: ein Möbelscharnier mit einer Dämpfvorrichtung in einer perspektivischen Darstellung,
- Fig. 3a, 3b: zwei verschiedene Schnittdarstellungen der Dämpfvorrichtung, wobei sich der Kolben in einer Bereitschaftsstellung befindet,
- Fig. 4a, 4b: zwei verschiedene Schnittdarstellungen der Dämpfvorrichtung, wobei sich der Kolben in einer eingedrückten Stellung befindet,
- Fig. 5a-5c: verschiedene Ansichten des Ausgleichskörpers, der mit der Dichtung der Fluidkammer und mit der Dichtung der Ausgleichskammer einstückig ausgebildet ist,
- Fig. 6: die Dämpfvorrichtung und Teile des Möbelscharniers in einer Explosionsdarstellung,
- Fig. 7a, 7b: einen Querschnitt der Dämpfvorrichtung gemäß einer weiteren Ausführungsform,
- Fig. 8a, 8b: einen Querschnitt der Dämpfvorrichtung in einer weiteren Ausgestaltung.

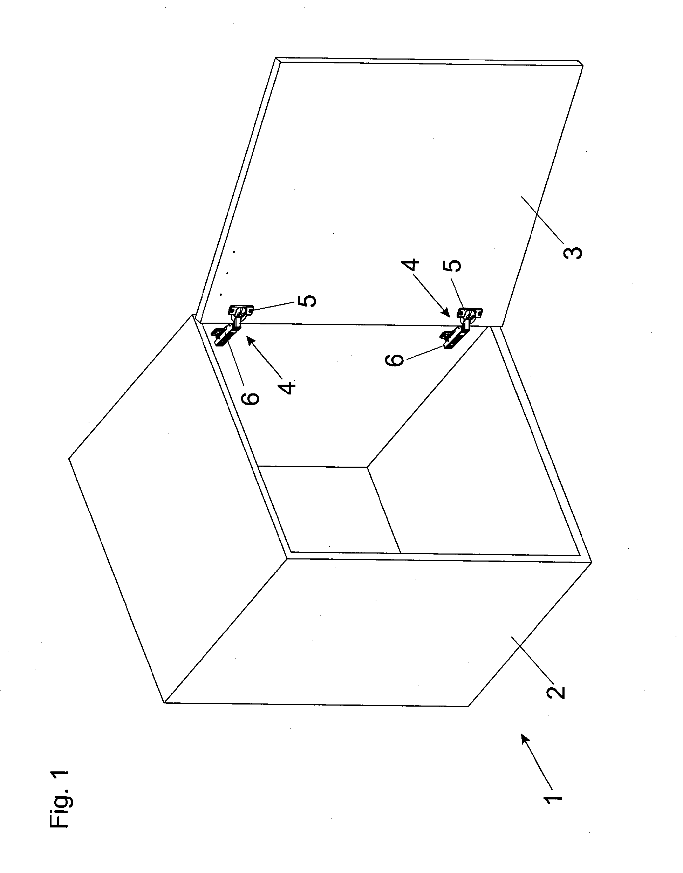

Fig. 1 zeigt ein Möbel 1 in einer perspektivischen Darstellung, wobei eine Türe 3 über Möbelscharniere 4 relativ zu einem Möbelkorpus 2 verschwenkbar gelagert ist. Die Möbelscharniere 4 weisen in bekannter Weise einen Scharniertopf 5 auf, der mit einem korpusseitigen Beschlagteil in Form eines Scharnierarmes 6 gelenkig verbunden ist. Die Möbelscharniere 4 weisen jeweils eine hier nicht ersichtliche Dämpfvorrichtung 7 zum Dämpfen einer Scharnierbewegung auf, wobei vorzugsweise vorgesehen ist, dass die Dämpfvorrichtung 7 im oder am Scharniertopf 5 gelagert ist. Insbesondere kann vorgesehen sein, dass an der Außenseite des Scharniertopfes 5 zumindest eine Dämpfvorrichtung 7 gelagert ist, wobei der Scharniertopf 5 zusammen mit zumindest einer daran angeordneten Dämpfvorrichtung 7 gemeinsam innerhalb einer vorgesehen Möbelstandardbohrung der Türe 3 einsetzbar und innerhalb eines gedachten Bohrungsdurchmessers der Bohrung angeordnet sind.

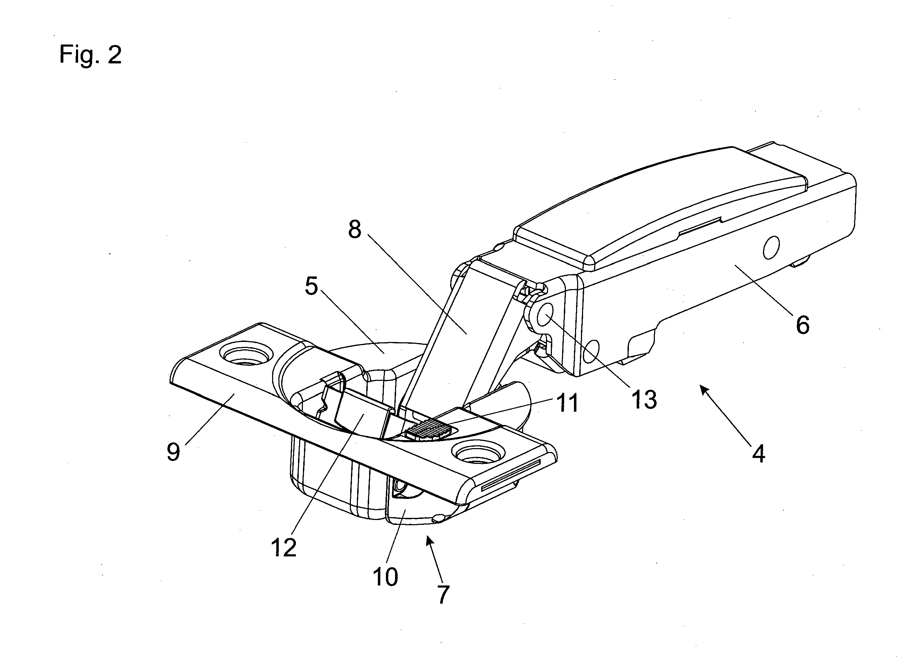

Fig. 2 zeigt ein Möbelscharnier 4 in einer perspektivischen Darstellung, wobei der Scharniertopf 5 über zumindest einen Gelenkhebel 8 schwenkbar mit dem Scharnierarm 6 verbunden ist. Der Scharniertopf 5 ist mit einem Befestigungsflansch 9 versehen, wobei wenigstens eine Dämpfvorrichtung 7 mit einem Dämpfergehäuse 10 unterhalb des Befestigungsflansches 9 und an der Außenseite des Scharniertopfes 5 gelagert ist. Die Dämpfvorrichtung 7 weist einen durch eine Person zu verstellenden Schalter 11 auf, durch den die Dämpfwirkung der Dämpfvorrichtung 7 - falls gewünscht - vollständig deaktivierbar ist. Innerhalb des Scharniertopfes 5 ist ein schwenkbar gelagertes Betätigungselement 12 vorgesehen, welches gegen Ende der Schließbewegung des Scharniers 4 vom Gelenkhebel 8 beaufschlagbar ist und von diesem in Richtung Scharniertopfboden eindrückbar ist. Diese letzte Schließbewegung kann durch die vorgesehene Dämpfvorrichtung 7 gedämpft werden. Das Betätigungselement 12 ist vorzugsweise um eine parallel zur Drehachse 13 parallele Achse verschwenkbar gelagert.

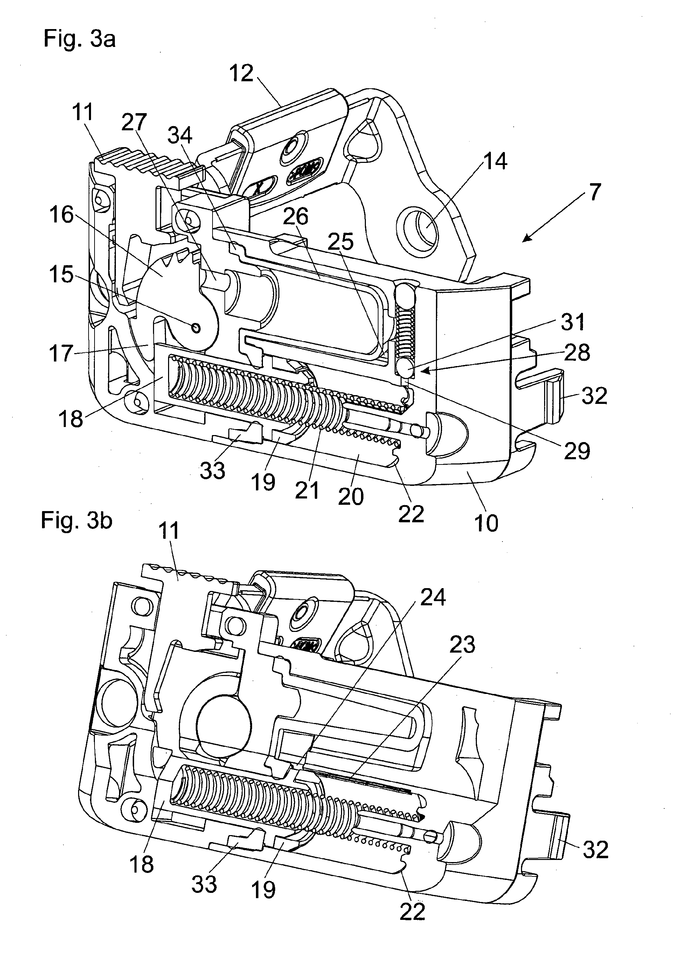

Fig. 3a und Fig. 3b zeigen die Dämpfvorrichtung 7 in zwei verschiedenen perspektivischen Schnittdarstellungen. Erkennbar ist das Betätigungselement 12, welches um eine Schwenkachse 14 relativ zum Scharniertopf 5 drehbar gelagert ist und welches gegen Ende der Schließbewegung von dem in den Scharniertopf 5 eintauchenden Gelenkhebel 8 (Fig. 2) beaufschlagbar ist. Ein um die Drehachse 15 schwenkbar gelagerter Hebel 16 ist mit dem Betätigungselement 12 bewegungsgekoppelt, sodass sich also der Hebel 16 mit einer Bewegung des Betätigungselementes 12 stets mitbewegt. Der Hebel 16 weist einen Hebelarm 17 auf, der an einem Stößel 18 (bzw. an einer Kolbenstange) anliegt. Der Stößel 18 ist mit einem Kolben 19 verbunden, der in einer Fluidkammer 20 des Dämpfergehäuses 10 verschiebbar gelagert ist. Durch eine in der Fluidkammer 20 angeordnete Rückstellfeder 21 kann der Stößel 18 (und damit der Kolben 19) nach erfolgtem Dämpfungshub wieder in eine für den nächsten Dämpfungshub vorgesehene Bereitschaftsstellung rückgestellt werden. In den Fig. 3a und Fig. 3b befindet sich der Kolben 19 in einer solchen Bereitschaftsstellung. Die Fluidkammer 20 ist mit einem hydraulischen Dämpfungsfluid befüllt, welches bei einer Verschiebung des Kolbens 19 in Richtung des Bodens 22 der Fluidkammer 20 durch einen Spalt, welcher zwischen dem Kolben 19 und der Innenwand 23 (Fig. 3b) der Fluidkammer 20 verbleibt, seitlich am Kolben 19 vorbeiströmen und durch einen Kanal 24 (Fig. 3b) in eine Ausgleichskammer 25 strömen kann, in der ein verformbarer Ausgleichskörper 26 gelagert ist. Dieser Ausgleichskörper 26 dient zur Kompensation des Volumens des in die Fluidkammer 20 einfahrenden Stößels 18. Wie aus Fig. 3a gut hervorgeht, ist der Ausgleichskörper 26 in Ruhelage im Wesentlichen sackförmig ausgebildet und füllt die Ausgleichskammer 25 im Wesentlichen vollständig aus. Der Ausgleichskörper 26 ist mit Luft gefüllt und ist beim Dämpfungshub - also wenn der Stößel 18 in Richtung zum Boden 22 der Fluidkammer 20 bewegt wird - durch das in die Ausgleichskammer 26 gelangende Flüssigkeitsvolumen elastisch verformbar, wobei durch eine Öffnung 27 des Dämpfergehäuses 10 Luft entweichen kann. Wenn der Stößel 18 durch die Kraft der Rückstellfeder 21 wieder in die Bereitschaftsstellung zurückbewegt wird, so kann das in der Ausgleichskammer 25 befindliche Dämpfungsfluid durch den dadurch hervorgerufenen Unterdruck wieder in die Fluidkammer 20 zurückströmen und der Ausgleichskörper 26 kann durch die durch die Öffnung 27 einströmende Luft wieder die in Fig. 3a gezeigte sackförmige Form einnehmen. Ferner ist eine Überlastsicherung 28 vorgesehen, durch die oberhalb eines Schwellwertes einer Druckbeaufschlagung auf den Stößel 18 zumindest eine Überlastöffnung 29 zwischen der Fluidkammer 20 und der Ausgleichskammer 25 öffenbar ist. Die Überlastsicherung 28 umfasst eine durch eine Feder 30 vorgespannte Kugel 31, welche bei Überschreitung eines vorgegebenen Fluiddrucks die Überlastöffnung 29 freigibt, sodass bei Überlast das Dämpfungsfluid von der Fluidkammer 20 in die Ausgleichskammer 25 überströmen kann. Bei Unterschreitung des vorgegebenen Fluiddrucks wird hingegen die Überlastöffnung 29 durch die federbelastete Kugel 31 wieder verschlossen.

Wesentlich ist eine Dichtung 33, welche den Stößel 18 gegenüber dem Dämpfergehäuse 10 abdichtet und welche gemeinsam mit dem Ausgleichskörper 26 einstückig ausgebildet ist. Im gezeigten Ausführungsbeispiel ist darüber hinaus vorgesehen, dass der Dichtungskörper 34, der die Ausgleichskammer 25 gegenüber dem Dämpfergehäuse 10 abdichtet, gemeinsam mit der Dichtung 33 und dem Ausgleichskörper 26 einstückig ausgebildet ist.

Fig. 3b zeigt die Dämpfvorrichtung 7 gemäß Fig. 3b in einer anderen Schnittdarstellung wobei der zwischen dem Kolben 19 und der Innenwand 23 der Fluidkammer 20 verbleibende Spalt erkennbar ist, durch den das Dämpfungsfluid von einer Kolbenseite zur anderen strömen kann. Die Innenwand 23 der Fluidkammer 20 kann zur Beeinflussung der Dämpfwirkung Nuten aufweisen, welche in Richtung Boden 22 einen sich verjüngenden Strömungsquerschnitt aufweisen, wodurch eine adaptive Dämpfung herbeigeführt werden kann. Zu erkennen ist der Schalter 11 zur Deaktivierung der Dämpfungsfunktion sowie zumindest ein federnd ausgebildetes Rastelement 32 zur - vorzugsweise lösbaren - Befestigung der Dämpfungsvorrichtung 7 am Scharniertopf 5. Zur Erzielung einer besonders kompakten Dämpfvorrichtung 7 kann vorgesehen sein, dass die Fluidkammer 20 eine erste Längsachse und dass die Ausgleichskammer 25 eine zweite Längsachse aufweist, wobei die erste Längsachse der Fluidkammer 20 und die zweite Längsachse der Ausgleichskammer 25 im Wesentlichen parallel beabstandet zueinander verlaufen.

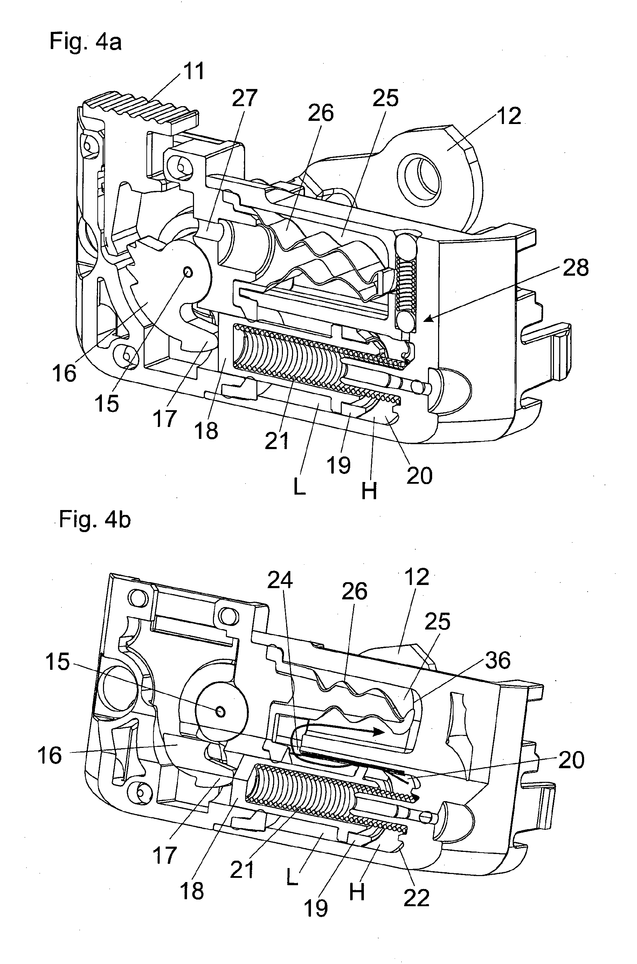

Fig. 4a und Fig. 4b zeigen zwei verschiedene Schnittdarstellungen der Dämpfvorrichtung 7, wobei sich der Kolben 19 nahe der hinteren Endstellung befindet. Durch eine Verschwenkbewegung des Betätigungselementes 12 wird auch der Hebel 16 verdreht, dessen Hebelende 17 den Stößel 18 (und damit den Kolben 19) in die Fluidkammer 20 eindrückt. Das verdrängte Dämpfungsfluid kann dann - entsprechend dem eingezeichneten Pfeil in Fig. 4b - ausgehend von der Hochdruckseite (H) seitlich am Kolben 19 vorbei zur Niederdruckseite (L) und durch den Kanal 24 in die Ausgleichskammer 25 strömen, wodurch der Ausgleichskörper 26 verformt und damit das Volumen des eintauchenden Stößels 18 kompensiert wird. Die im Ausgleichskörper 26 verdrängte Luft kann aus der Öffnung 27 (Fig. 4a) ausströmen. Nach erfolgtem Dämpfungshub kann die Rückstellfeder 21 den Kolben 19 wieder rückstellen, wobei durch den dadurch hervorgerufenen Unterdruck das Dämpfungsfluid ausgehend von der Ausgleichskammer 25 wieder zurück in die Fluidkammer 20 zurückströmen kann und der Ausgleichskörper 26 durch Einströmen von Luft durch die Öffnung 27 wieder die ursprüngliche Form (Fig. 3a) einnehmen kann. Der Kanal 24 kann ausgehend von jenem Endbereich der Fluidkammer 20, der vom Boden 22 der Fluidkammer 20 abgewandt ist, zur Ausgleichskammer 25 führen. Der Kanal 24 mündet dann in jenen Endbereich der Ausgleichskammer 25, der vom Boden 36 der Ausgleichskammer 25 abgewandt ist, ein. Der Vorteil des von der Niederdruckseite (L) ausgehenden Kanals 24 ist dessen geringe Länge zur Ausgleichskammer 25, wodurch die Gefahr einer Leckage weitgehend ausgeschlossen ist. Außerdem ist der Ausgleichskörper 26 aufgrund der Beaufschlagung von der Niederdruckseite (L) her definierter verformbar und kann sich so an den jeweilig herrschenden Fluiddruck verbessert anpassen.

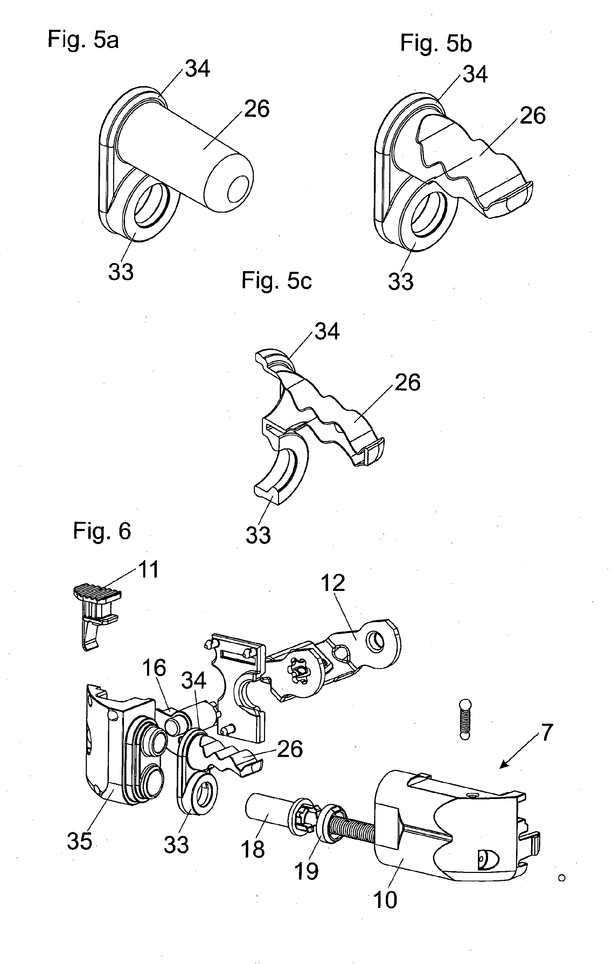

Fig. 5a-5c zeigen den Ausgleichskörper 26 in verschiedenen Darstellungen. Fig. 5a zeigt den Ausgleichskörper 26 in Ruhelage, der in dieser Betriebsstellung sackförmig ausgebildet ist. Der Ausgleichskörper 26 ist zusammen mit der Dichtung 33 (welche den Stößel 18 gegenüber dem Dämpfergehäuse 10 abdichtet) und dem Dichtungskörper 34 (welche die Ausgleichskammer 25 gegenüber dem Dämpfergehäuse 10 abdichtet) als gemeinsame, einstückige Baueinheit ausgebildet. Fig. 5b zeigt den Ausgleichskörper 26 im komprimierten Zustand, während Fig. 5c eine Schnittdarstellung des hohlförmig ausgebildeten Ausgleichskörpers 26, des Dichtungskörpers 34 und der Dichtung 33 visualisiert.

Fig. 6 zeigt eine Explosionsdarstellung der Dämpfvorrichtung 7, wobei im Dämpfergehäuse 10 die Fluidkammer 20 und die relativ dazu seitlich parallel verlaufende Ausgleichskammer 25 ausgebildet sind. Erkennbar ist das Betätigungselement 12, welches in Montagelage mit dem Hebel 16 drehfest in Verbindung steht. Der Stößel 18 ist mit dem Kolben 19 verbunden, wobei der Stößel 18 gegenüber dem Dämpfergehäuse 10 mittels der Dichtung 33 abgedichtet ist, welche zusammen mit dem Dichtungskörper 34 der Ausgleichskammer 25 und dem elastisch komprimierbaren Ausgleichskörper 26 einstückig ausgebildet ist. Das kolbenabgewandte Ende des Stößels 18 bzw. der Kolbenstange ist in Montagelage aus der Fluidkammer 20 herausgeführt und ragt in einen Verschlussteil 35 hinein.

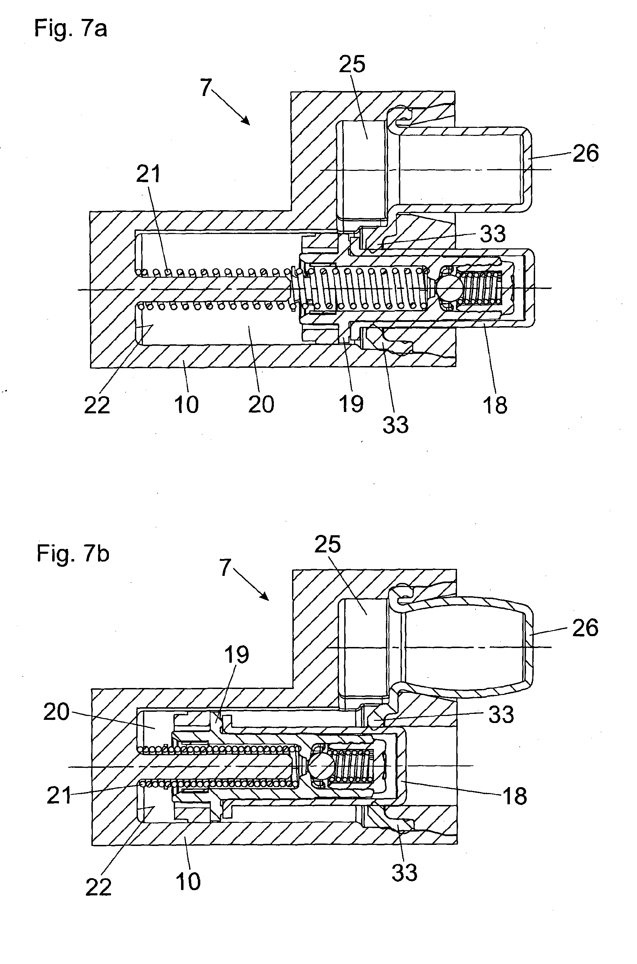

Fig. 7a und Fig. 7b zeigen die Dämpfvorrichtung 7 gemäß einem weiteren Ausführungsbeispiel im Querschnitt. Fig. 7a zeigt die Dämpfvorrichtung 7 mit einem in der Bereitschaftsstellung befindlichen Stößel 18, Fig. 7b zeigt hingegen den in die Fluidkammer 20 eingedrückten Stößel 18 bzw. Kolben 19. Im Dämpfergehäuse 10 sind eine Fluidkammer 20 und eine seitlich dazu parallel verlaufende Ausgleichskammer 25 ausgebildet. Die zur Abdichtung der Fluidkammer 20 vorgesehene Dichtung 33, welche vom Stößel 18 durchsetzt wird, ist zusammen mit dem verformbaren Ausgleichskörper 26 einstückig ausgebildet. Im gezeigten Ausführungsbeispiel ist der sackförmige Ausgleichskörper 26 so angeordnet, dass dieser - bezogen auf den Boden 22 der Fluidkammer 20 - in eine dazu entgegengesetzte Richtung weist und aus dem Dämpfergehäuse 10 herausragt. Wenn nun der Stößel 18 in die Fluidkammer 20 eingedrückt wird, so gelangt das verdrängte Dämpfungsfluid in das Innere des Ausgleichskörpers 26 und wölbt diesen - wie in Fig. 7b gezeigt - in einer quer zum Dämpfungshub des Kolbens 19 verlaufenden Richtung auf. Nach erfolgtem Dämpfungshub kann der Kolben 19 durch die Kraft einer Rückstellfeder 21 wieder in die Bereitschaftsstellung gemäß Fig. 7a zurückbewegt werden.

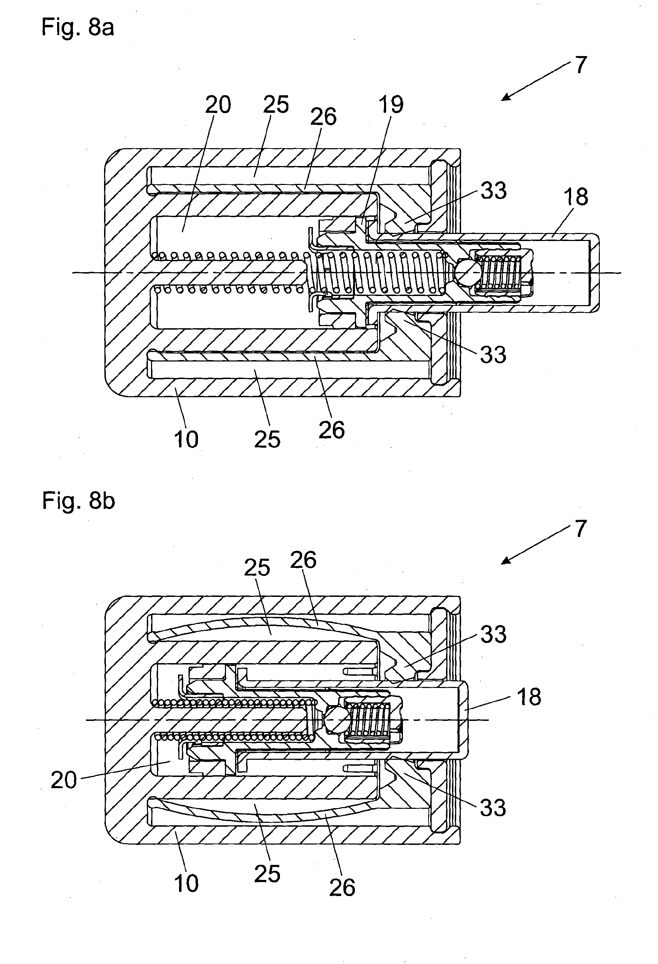

Fig. 8a und Fig. 8b zeigen einen Querschnitt der Dämpfvorrichtung 7 gemäß einem weiteren Ausführungsbeispiel. Im Dämpfergehäuse 10 ist eine Fluidkammer 20 mit einem darin verschiebbar gelagerten Kolben 19 vorgesehen, wobei der Kolben 19 mit dem Stößel 18 verbunden ist. Konzentrisch zur Fluidkammer 20 ist eine Ausgleichskammer 25 vorgesehen, welche die Fluidkammer 20 - vorzugsweise ringförmig - umgibt. Die Dichtung 33 zur Abdichtung der Fluidkammer 20, welche vom Stößel 18 durchsetzt wird, ist mit dem verformbaren Ausgleichskörper 26 einstückig ausgebildet. Fig. 8a zeigt die Dämpfvorrichtung 7 mit dem Stößel 18 in einer Bereitschaftsstellung. Wenn nun der Stößel 18 in die Fluidkammer 20 eingedrückt wird, so gelangt das verdrängte Dämpfungsfluid in die Ausgleichskammer 25 hinein und wölbt den manschettenartig ausgebildeten Ausgleichskörper 26 in radialer Richtung auf. Die Richtung der maximalen Ausdehnung des Ausgleichskörpers 26 verläuft dabei im Wesentlichen in einer rechtwinklig zum Dämpfungshub des Kolbens 19 verlaufenden Richtung.

Die vorliegende Erfindung beschränkt sich nicht nur auf die gezeigten Ausführungsbeispiele, sondern erfasst bzw. erstreckt sich auf alle Varianten und technischen Äquivalente, welche in die Reichweite der nachfolgenden Ansprüche fallen können. Auch sind die in der Beschreibung gewählten Lageangaben, wie z.B. oben, unten, seitlich, usw., auf die unmittelbar beschriebene bzw. dargestellte Figur bezogen und sind bei einer Lageänderung sinngemäß auf die neue Lage zu übertragen. Die Ausgleichskammer 25 ist vorzugsweise von der Fluidkammer 20 getrennt, kann aber auch in die Fluidkammer 20 integriert sein. Der Kolben 19 kann auch mit zumindest einer Öffnung versehen werden, durch die das Dämpfungsfluid zwischen Hochdruckseite (H) und Niederdruckseite (L) durch den Kolben 19 hindurchströmen kann.

## Patentansprüche

1. Dämpfvorrichtung (7) für bewegbare Möbelteile (3), umfassend:
- ein Dämpfergehäuse (10),
- eine im Dämpfergehäuse (10) angeordnete Fluidkammer (20), in der ein Kolben (19) verschiebbar gelagert ist,
- einen mit dem Kolben (19) verbundenen Stößel (18), wobei zwischen dem Dämpfergehäuse (10) und dem Stößel (18) zumindest eine Dichtung (33) zur Abdichtung der Fluidkammer (20) angeordnet ist, wobei die Dichtung (33) vom Stößel (18) durchsetzt wird,
- eine mit der Fluidkammer (20) in fluidleitender Verbindung stehende Ausgleichskammer (25), welche seitlich parallel zur Fluidkammer (20) verläuft und in der zumindest ein verformbarer Ausgleichskörper (26) zur Kompensation einer Volumenänderung aufgrund des in die Fluidkammer (20) eintauchenden Stößels (18) angeordnet ist,
**dadurch gekennzeichnet, dass** der verformbare Ausgleichskörper (26) und die zumindest eine Dichtung (33) zusammen einstückig ausgebildet sind.

2. Dämpfvorrichtung nach Anspruch 1, **dadurch gekennzeichnet, dass** der Ausgleichskörper (26) als, vorzugsweise mit Luft gefüllter, Hohlkörper ausgebildet ist.

3. Dämpfvorrichtung nach Anspruch 1 oder 2, **dadurch gekennzeichnet, dass** der Ausgleichskörper (26) zumindest abschnittsweise im Wesentlichen sackförmig ausgebildet ist.

4. Dämpfvorrichtung nach einem der Ansprüche 1 bis 3, **dadurch gekennzeichnet, dass** der Ausgleichskörper (26) in Ruhelage die Ausgleichskammer (25) im Wesentlichen vollständig ausfüllt und bei einem Dämpfungshub komprimierbar ist.

5. Dämpfvorrichtung nach einem der Ansprüche 1 bis 4, **dadurch gekennzeichnet, dass** das Dämpfergehäuse (10) eine Öffnung (27) aufweist, durch welche im Ausgleichskörper (26) befindliche Luft ausströmen und durch welche Luft bei einer Rückstellung des Kolbens (19) in den Ausgleichskörper (26) einströmen kann.

6. Dämpfvorrichtung nach einem der Ansprüche 1 bis 5, **dadurch gekennzeichnet, dass** die Fluidkammer (20) eine erste Längsachse und dass die Ausgleichskammer (25) eine zweite Längsachse aufweist, wobei die erste Längsachse der Fluidkammer (20) und die zweite Längsachse der Ausgleichskammer (25) im Wesentlichen parallel zueinander verlaufen.

7. Dämpfvorrichtung nach einem der Ansprüche 1 bis 6, **dadurch gekennzeichnet, dass** in der Ausgleichskammer (25) ein Dichtungskörper (34) zur Abdichtung der Ausgleichskammer (25) angeordnet ist, wobei der Ausgleichskörper (26), die Dichtung (33) und der Dichtungskörper (34) gemeinsam einstückig ausgebildet sind.

8. Dämpfvorrichtung nach einem der Ansprüche 1 bis 7, **dadurch gekennzeichnet, dass** in der Fluidkammer (20) eine Rückstellfeder (21) angeordnet ist, durch die der Kolben (19) nach erfolgtem Dämpfungshub wieder in eine für den nächsten Dämpfungshub vorgesehene Bereitschaftsstellung rückstellbar ist.

9. Dämpfvorrichtung nach einem der Ansprüche 1 bis 8, **dadurch gekennzeichnet, dass** zwischen dem Kolben (19) und der Innenwand (23) der Fluidkammer (20) ein Spalt verbleibt, durch den beim Dämpfungshub das Dämpfungsfluid am Kolben (19) seitlich vorbeiströmt.

10. Dämpfvorrichtung nach einem der Ansprüche 1 bis 9, **dadurch gekennzeichnet, dass** eine Überlastsicherung (28) vorgesehen ist, durch die oberhalb eines Schwellwertes einer Druckbeaufschlagung auf den Stößel (18) zumindest eine Überlastöffnung (29) zwischen der Fluidkammer (20) und der Ausgleichskammer (25) öffenbar ist.

11. Dämpfvorrichtung (7) nach einem der Ansprüche 1 bis 10, **dadurch gekennzeichnet, dass** die Fluidkammer (20) und die Ausgleichskammer (25) über wenigstens einen Kanal (24) miteinander verbunden sind, wobei der Kanal (24) ausgehend von jenem Endbereich der Fluidkammer (20), der vom Boden (22) der Fluidkammer (20) abgewandt ist, zur Ausgleichskammer (25) führt.

12. Dämpfvorrichtung nach Anspruch 11, **dadurch gekennzeichnet, dass** der Kanal (24) in jenen Endbereich der Ausgleichskammer (25), der vom Boden (36) der Ausgleichskammer (25) abgewandt ist, einmündet.

13. Möbelscharnier (4) mit zumindest einer Dämpfvorrichtung (7) nach einem der Ansprüche 1 bis 12 zum Dämpfen einer Bewegung des Möbelscharniers (4).

14. Möbelscharnier nach Anspruch 13, **dadurch gekennzeichnet, dass** das Möbelscharnier (4) einen Scharniertopf (5) und ein damit gelenkig verbundenes korpusseitiges Anschlagteil (6) zur Befestigung an den jeweiligen Möbelteilen (2, 3) aufweist, wobei die Dämpfvorrichtung (7) am oder im Scharniertopf (5) gelagert ist.

15. Möbelscharnier nach Anspruch 14, **dadurch gekennzeichnet, dass** der Stößel (18) der Dämpfvorrichtung (7) während einer Scharnierbewegung vom Anschlagteil (6) oder von einem mit der Scharnierbewegung zwangsgekoppelten Betätigungselement (12) beaufschlagbar ist, wodurch der Kolben (19) in die Fluidkammer (20) eindrückbar ist.

## Claims

1. A damping device (7) for moveable furniture parts (3), comprising:
- a damper housing (10),
- a fluid chamber (20) which is arranged in the damper housing (10) and in which a piston (19) is moveably supported,
- a ram (18) connected to the piston (19), wherein arranged between the damper housing (10) and the ram (18) is at least one seal (33) for sealing off the fluid chamber (20), wherein the ram (18) passes through the seal (33),
- a compensating chamber (25) which is in fluid-conducting relationship with the fluid chamber (20) and which extends laterally parallel to the fluid chamber (20) and in which there is arranged at least one deformable compensating body (26) for compensation for a change in volume by virtue of the ram (18) immersing into the fluid chamber (20),
**characterized in that** the deformable compensating body (26) and the at least one seal (33) are of a one-piece configuration.

2. The damping device according to claim 1, **characterized in that** the compensating body (26) is in the form of a hollow body, preferably filled with air.

3. The damping device according to claim 1 or 2, **characterized in that** the compensating body (26) is at least portion-wise of a substantially bag-form configuration.

4. The damping device according to one of the claims 1 to 3, **characterized in that** in the rest position, the compensating body (26) substantially completely fills the compensating chamber (25) and is compressible in a damping stroke.

5. The damping device according to one of the claims 1 to 4, **characterized in that** the damper housing (10) has an opening (27) through which air in the compensating body (26) can flow out and through which air can flow into the compensating body (26) in a return movement of the piston (19).

6. The damping device according to one of the claims 1 to 5, **characterized in that** the fluid chamber (20) has a first longitudinal axis and that the compensating chamber (25) has a second longitudinal axis, wherein the first longitudinal axis of the fluid chamber (20) and the second longitudinal axis of the compensating chamber (25) extend in substantially mutually parallel relationship.

7. The damping device according to one of the claims 1 to 6, **characterized in that** a sealing body (34) is arranged in the compensating chamber (25) to seal off the compensating chamber (25), wherein the compensating body (26), the seal (33) and the sealing body (34) are provided jointly in a one-piece configuration.

8. The damping device according to one of the claims 1 to 7, **characterized in that** arranged in the fluid chamber (20) is a return spring (21) by which the piston (19) can be returned after a damping stroke movement into a ready position provided for the next damping stroke.

9. The damping device according to one of the claims 1 to 8, **characterized in that** remaining between the piston (19) and the inside wall (23) of the fluid chamber (20) is a gap, through which the damping fluid flows laterally past the piston (19) in the damping stroke.

10. The damping device according to one of the claims 1 to 9, **characterized in that** there is provided an overload protection means (28), by which above a threshold value of a pressure acting on the ram (18), at least one overload opening (29) between the fluid chamber (20) and the compensating chamber (25) is openable.

11. The damping device according to one of the claims 1 to 10, **characterized in that** the fluid chamber (20) and the compensating chamber (25) are connected together by way of at least one passage (24), wherein the passage (24) leads to the compensating chamber (25) starting from that end region of the fluid chamber (20), that is away from the end (22) of the fluid chamber (20).

12. The damping device according to claim 11, **characterized in that** the passage (24) opens into that end region of the compensating chamber (25), that is away from the end (36) of the compensating chamber (25).

13. A furniture hinge (4) comprising at least one damping device (7) according to one of the claims 1 to 12 for damping a movement of the furniture hinge (4).

14. The furniture hinge according to claim 13, **characterized in that** the furniture hinge (4) has a hinge cup (5) and a carcass-side fitment portion (6) hingedly connected thereto for fixing to the respective furniture parts (2, 3), wherein the damping device (7) is mounted on or within the hinge cup (5).

15. The furniture hinge according to claim 14, **characterized in that** during a hinge movement, the ram (18) of the damping device (7) can be acted upon by the fitment portion (6) or by an actuating element (12) positively coupled to the hinge movement, whereby the piston (19) can be pressed into the fluid chamber (20).

## Revendications

1. Dispositif d'amortissement (7) pour des pièces de meuble mobiles (3), comprenant :
- un boîtier d'amortisseur (10),
- une chambre de fluide (20) disposée dans un boîtier d'amortisseur (10), dans laquelle est logé un piston (19) de façon mobile,
- une tige-poussoir (18) reliée au piston (19), au moins une garniture (33) étant disposée entre le boîtier d'amortisseur (10) et la tige-poussoir (18) pour rendre étanche la chambre de fluide (20), la garniture (33) étant traversée par la tige-poussoir (18),
- une chambre de compensation (25) se trouvant en liaison conductrice de fluide avec la chambre de fluide (20), laquelle s'étend en parallèle et à côté de la chambre de fluide (20) et dans laquelle au moins un corps de compensation déformable (26) est disposé pour la compensation d'une modification de volume en raison de la tige-poussoir (18) plongeant dans la chambre de fluide (20),
**caractérisé en ce que** le corps de compensation déformable (26) et l'au moins une garniture (33) sont conçus ensemble d'une seule pièce.

2. Dispositif d'amortissement selon la revendication 1, **caractérisé en ce que** le corps de compensation (26) est conçu comme un creux, de préférence rempli d'air.

3. Dispositif d'amortissement selon la revendication 1 ou 2, **caractérisé en ce que** le corps de compensation (26) est conçu au moins par endroits essentiellement en forme de sac.

4. Dispositif d'amortissement selon l'une des revendications 1 à 3, **caractérisé en ce que** le corps de compensation (26) en position de repos remplit essentiellement intégralement la chambre de compensation (25) et peut être comprimé lors d'une course d'amortissement.

5. Dispositif d'amortissement selon l'une des revendications 1 à 4, **caractérisé en ce que** le boîtier d'amortissement (10) présente une ouverture (27), à travers laquelle l'air se trouvant dans le corps de compensation (26) peut s'échapper et à travers laquelle peut rentrer l'air lors d'un mouvement en retour du piston (19) dans le corps de compensation (26).

6. Dispositif d'amortissement selon l'une des revendications 1 à 5, **caractérisé en ce que** la chambre de fluide (20) présente un premier axe longitudinal et **en ce que** la chambre de compensation (25) présente un deuxième axe longitudinal, le premier axe longitudinal de la chambre de fluide (20) et le deuxième axe longitudinal de la chambre de compensation (25) s'étendant essentiellement en parallèle l'un à l'autre.

7. Dispositif d'amortissement selon l'une des revendications 1 à 6, **caractérisé en ce que** dans la chambre de compensation (25) est disposé un corps de garniture (34) pour rendre étanche la chambre de compensation (25), le corps de compensation (26), la garniture (33) et le corps de garniture (34) étant conçus ensemble d'une seule pièce.

8. Dispositif d'amortissement selon l'une des revendications 1 à 7, **caractérisé en ce que** dans la chambre de fluide (20) est disposé un ressort de rappel (21), par lequel, après réalisation de la course d'amortissement, le piston (19) peut revenir de nouveau dans une position d'attente prévue pour la prochaine course d'amortissement.

9. Dispositif d'amortissement selon l'une des revendications 1 à 8, **caractérisé en ce que** entre le piston (19) et la paroi intérieure (23) de la chambre de fluide (20) demeure une fente à travers laquelle, lors de la course d'amortissement, s'écoule latéralement le fluide d'amortissement sur le piston (19).

10. Dispositif d'amortissement selon l'une des revendications 1 à 9, **caractérisé en ce qu'**est prévue une sécurité de surcharge (28) à travers laquelle peut être ouverte, au-dessus d'une valeur seuil d'une pression d'alimentation sur la tige-poussoir (18), au moins une ouverture de surcharge (29) entre la chambre de fluide (20) et la chambre de compensation (25).

11. Dispositif d'amortissement (7) selon l'une des revendications 1 à 10, **caractérisé en ce que** la chambre de fluide (20) et la chambre de compensation (25) sont reliées ensemble par au moins un canal (24), dans lequel le canal (24) conduit à la chambre de compensation (25) en partant de la zone d'extrémité de la chambre de fluide (20) qui est opposée au fond (22) de la chambre de fluide (20).

12. Dispositif d'amortissement selon la revendication 11, **caractérisé en ce que** le canal (24) débouche dans la zone d'extrémité de la chambre de compensation (25) qui est opposée au fond (36) de la chambre de compensation (25).

13. Charnière de meuble (4) avec au moins un dispositif d'amortissement (7) selon l'une des revendications 1 à 12 pour amortir un mouvement de la charnière de meuble (4).

14. Charnière de meuble selon la revendication 13, **caractérisée en ce que** la charnière de meuble (4) présente une coupelle de charnière (5) et une partie de fixation (6) côté corps du meuble reliées de façon articulée, pour fixation aux parties de meuble respectives (2, 3), le dispositif d'amortissement (7) étant logé sur ou dans la coupelle de charnière (5).

15. Charnière de meuble selon la revendication 14, **caractérisée en ce que** la tige-poussoir (18) du dispositif d'amortissement (7) peut être sollicitée pendant un mouvement de charnière par la partie de fixation (6) ou par un élément de commande (12) solidaire de la charnière, le piston (19) pouvant ainsi être enfoncé dans la chambre de fluide (20).
